(19) Europäisches Patentamt
European Patent Office
Office européen des brevets

(11) **EP 3 608 518 A1**

(12) **EUROPEAN PATENT APPLICATION**

(43) Date of publication:
**12.02.2020 Bulletin 2020/07**

(51) Int Cl.:
*F01D 25/16* (2006.01)   *F02K 3/06* (2006.01)

(21) Application number: **19184996.7**

(22) Date of filing: **08.07.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.08.2018 GB 201812875**

(71) Applicant: **Rolls-Royce PLC London SW1E 6AT (GB)**

(72) Inventors:
• **Stretton, Richard**
  **Derby, Derbyshire DE24 8BJ (GB)**
• **Radomski, Steven**
  **Derby, Derbyshire DE24 8BJ (GB)**

(74) Representative: **Rolls-Royce plc**
   **Intellectual Property Dept SinA-48**
   **PO Box 31**
   **Derby DE24 8BJ (GB)**

(54) **GAS TURBINE ENGINE MOUNTING ARRANGEMENT**

(57) A gas turbine engine (10) comprises a bypass duct cowl (21), an engine core housing (22) defining an engine core inlet, a bypass fan (13) and a plurality of outlet guide vanes (24). Each outlet guide vane 24 extends between a radially inner surface of the bypass duct cowl (21) and a radially outer surface of the engine core housing (22, 23) to define an outlet guide vane span (SP-ANOGV). The outlet guide vanes (24) are configured to support the engine core housing (22, 23) relative to the bypass duct cowl (21). The bypass fan (13) and an engine core inlet (34) define a bypass ratio between 10 and 17, and a ratio of the outlet guide vane span (OGVSPAN) to a bypass fan radius (RFAN) is between 0.45 and 0.55.

Figure 1

## Description

The present disclosure concerns an aircraft gas turbine engine.

Conventional aircraft gas turbine engines comprise an engine core having a compressor, combustor and turbine, as well as a bypass duct comprising a turbine driven fan. A bypass ratio is defined as the ratio of the mass flow rate of the flow through the bypass duct to the mass flow rate of the flow through the core at cruise conditions. In recent years, there has been a steady progression toward aircraft engines with higher bypass ratios.

Engines are typically supported at a front end by one or more bifurcation supports, or one or more outlet guide vanes located rearward of the fan. An arrangement in which the core engine is supported by outlet guide vanes is described in US patent application US20110192166.

As bypass ratios increase, the outlet guide vanes become longer (i.e. have greater radial extent), which increases the flexibility of the guide vanes for a given cross-section and material. However, high structural rigidity is desirable to counteract loads induced by gyroscopic forces during aircraft manoeuvres such as take-off, and vibrational loads during flight. Consequently, as bypass ratios increase, structural weight and / or surface area of the OGVs in a conventional gas turbine engine must also increase, to provide the necessary rigidity. This in turn results in a heavier engine, and / or increased aerodynamic drag in the bypass nacelle.

According to a first aspect there is provided a gas turbine engine comprising:

a bypass duct cowl;
an engine core housing defining an engine core inlet;
a bypass fan; and
a plurality of outlet guide vanes extending between a radially inner surface of the bypass duct cowl, and a radially outer surface of the engine core housing to define an outlet guide vane span, the outlet guide vanes being configured to support the engine core housing relative to the bypass duct cowl;
wherein the bypass fan and an engine core inlet define a bypass ratio between 10 and 17; and a ratio of the outlet guide vane span to a bypass fan radius is between 0.45 and 0.55.

It has been found that by providing a high bypass ratio gas turbine engine with relatively short OGVs, a relatively stiff forward mounting structure can be provided, while minimising the weight and aerodynamic drag of the OGVs.

The fan outlet guide vanes, bypass duct cowl and bypass fan may be arranged such that the condition

$$x = K \frac{SPAN_{OGV}{}^3}{CHORD_{OGV}{}^4} \cdot \frac{Xa \cdot F_i}{R_{OGV}}$$

is satisfied, where $SPA$-

$N_{OGV}$ is the span of the outlet guide vane, $CHORD_{OGV}$ is the chord of the outlet guide vane, $Xa$ is the distance between the bypass nacelle inlet aerodynamic centre of pressure and the centre of the outlet guide vane, $F_i$ is the maximum intake upload for which the engine is certified, $R_{OGV}$ is a distance from the engine axis of the tip of the outlet guide vanes in the radial plane, and K is a proportionality constant accounting the youngs modulus of the OGV, such that x is equates to the OGV tip deflection. In practice it will be desirable to keep this deflection in the range +/-20mm for normal flight loads. This can be achieved by tuning the stiffness of the OGV assembly by adapting the Span, Chord, thickness, and outer radius of the OGV system.

A ratio of the inner radius of the outlet guide vanes and an outer radius of the outlet guide vanes may be between 0.5 and 0.6.

A ratio of an axial distance between an inlet to the bypass duct cowl and a trailing edge of the outlet guide vanes, and an outer radius of the outlet guide vanes may be between 1 and 1.5.

Each outlet guide vane may have an aspect ratio of between 2 and 8.

A ratio of the outer radius of the outlet guide vanes to the radius of the fan may be equal to or greater than 1, and may be between 1 and 1.2.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

An embodiment will now be described by way of example only, with reference to the Figures, in which:

**Figure 1** is a sectional side view of a gas turbine engine;

**Figure 2** is a sectional side view of part of the gas turbine engine of figure 1.

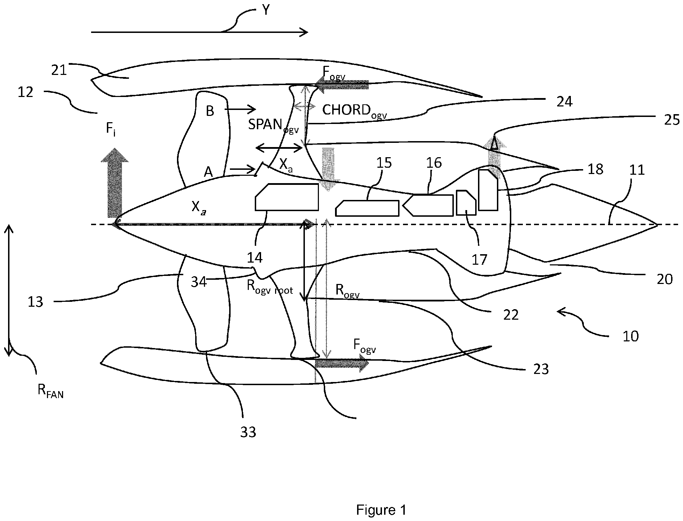

With reference to Figure 1, a gas turbine engine is generally indicated at 10, having a principal and rotational axis 11. It will be understood that this figure is illustrative only, and is not to scale. The engine 10 comprises, in axial flow series, an air intake 12, a propulsive fan 13, a low pressure compressor 14, a high-pressure compressor 15, combustion equipment 16, a high-pressure turbine 17, a low-pressure turbine 18 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow A into the low pressure compressor 14 and a second air flow B which passes through a bypass duct defined by an interior of the nacelle 21 to provide propulsive thrust. The low pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high and low-pressure turbines 17, 18, before being exhausted through the nozzle 20 to provide additional propulsive thrust. The high 17, and low 18 pressure turbines drive respectively the high pressure compressor 15, low pressure compressor 14 and fan 13, each by suitable interconnecting shaft. A reduction gearbox (not shown) may be provided to link the fan 13 to the low pressure turbine 18.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

Together, the compressors 14, 15, combustor 26 and turbines 17, 18 define a core, through which the first airflow A flows through an engine core inlet 34. The core is surrounded within a core housing arrangement comprising an inner core housing 22 and an outer core housing 23. The inner core housing provides an air-tight gas path for the core airflow A, while the outer core housing provides structural support for the core and the fan 13.

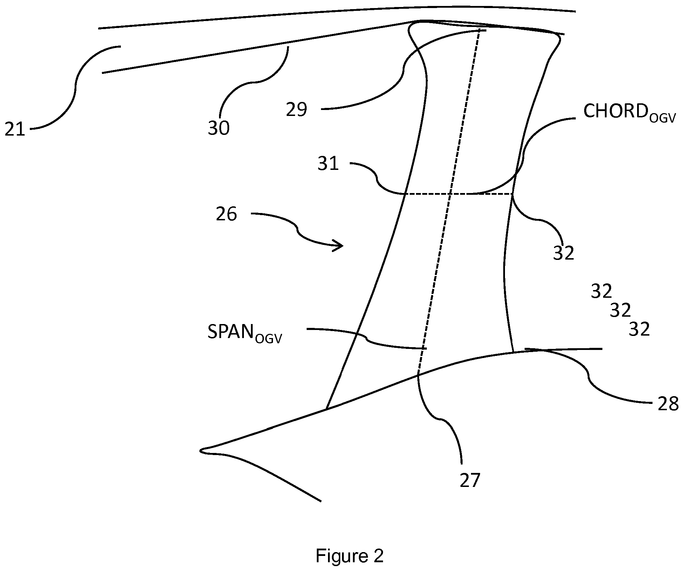

The core and fan 13 are supported by front and rear mounting arrangements 24, 25. The front mounting arrangement 24 comprises a plurality of outlet guide vanes (OGVs) 26, which are shown in more detail in figure 2, and described below.

A plurality of OGVs are provided, which are distributed circumferentially around the engine 10. A radially inner end ("root") 27 of each OGV 25 is mounted to an outer surface 28 of the outer core housing 23, while a radially outer end ("tip") 29 of each OGV 26 is mounted to an inner surface 30 of the nacelle 21.

The OGVs act as the supporting structure for the front portion of the engine, that is to say that the weight of the engine and any in flight loads are supported by the OGVs. In contrast, in most conventional engines, additional support structure in the form of bifurcations is generally necessary. Consequently, the OGVs must be designed to be both structurally and aerodynamically efficient.

Several geometric properties can be described for each OGV 26, which are generally alike. A chord CHORD$_{OGV}$ can be defined by a distance between leading 31 and trailing edges 32 at a mid-span position. A span SPAN$_{OGV}$ can be defined as a distance between the root 27 and the tip 29 of the respective OGV 26 at the mid-chord position.

From these geometric properties, further geometric properties can be defined. For example, an aspect ratio of the OGV can be determined by the following equation:

$$Aspect\ ratio = \frac{span^2}{area}$$

In this case, the aspect ratio is between 4 and 8. This provides a relatively stiff, strong OGV, which can react large loads without bending or failure.

Referring once more to figure 1, several more geometric properties of the engine 10 can be identified. The engine 10 has a bypass ratio of between 10 and 17, and in this example has a bypass ratio of approximately 10. The bypass can be defined as the ratio of the bypass mass flow B through the fan duct to the mass flow A through the core at a cruise condition. Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or in the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular.

A fan radius F$_{OGV}$ is defined by a distance from the longitudinal axis 11 and an aerodynamic tip 33 of the fan 13. Similarly, an OGV radius R$_{OGV}$ is defined by a distance from the longitudinal axis 11 and an aerodynamic tip 29 of the OGV 26.

A distance Y is defined as the axial distance between the air intake 12 to the bypass duct cowl 21 and a mid-chord of the outlet guide vanes 24 at the tip. A ratio between the distance Y and the outer radius R$_{OGV}$ of the outlet guide vanes 24 is typically between 1 and 1.7. This ratio is relatively

A distance *Xa* is defined as the axial distance between the inlet centre of pressure 12 and the centre of the OGVs 26. The location of the inlet centre of pressure can be determined by summing the internal inlet pressures and external cowl pressures across the inlet. During manoeuvres (such as take-off from a runway), a force *F$_i$* is generated at the forward end of the engine 10, effectively acting at the inlet 12. The intake upload may be calculated by summing the inlet internal and external surface pressures at a typical sizing case, e.g. high incidence take off rotation.

Certain relations between these geometric properties can also be determined. In particular, a ratio of the outlet guide vane span SPAN$_{OGV}$ to the bypass fan radius R$_{FAN}$ is between 0.45 and 0.55. This parameter is believed to be unique in a high bypass turbofan having a bypass ratio between 8 and 12.

In the present disclosure, as discussed above, the OGVs provide structural support for the front of the engine 10. On the other hand, they must also have high aerodynamic performance (i.e. provide low drag in use) and low weight. Consequently, it has been found that by providing a short span OGV relative to the bypass fan radius, a low weight, high strength OGV can be provided, which can support the engine in structurally and aerodynamically efficient manner. In particular, this has been found to result in a front structural support which is sufficiently stiff to prevent flexing of the fan case relative to the core casing, which could otherwise cause fatigue, and / or fan tip rubs.

In order to provide the desired bypass ratio with a short span OGV 26, the OGV is provided at a large radial extent, i.e. the OGV root 27 is provided relatively far from the longitudinal axis. Consequently, a large flow area can be provided at the OGVs, in spite of their short span. Consequently, in the present disclosure a second ratio is defined. The second ratio is defined by a ratio of the OGV inner radial distance R$_{ogv\ root}$ to the OGV outer radial distance R$_{ogv}$. The second ratio is between 0.5 and 0.6. The radial distances may be measured at the mid-chord position.

Further changes relative to conventional engine arrangements can also be made to maintain a short span OGV in combination with a large bypass ratio. The outer radius of the OGVs R$_{OGV}$ is generally equal to or greater than the radius of the fan R$_{fan}$. Typically, the ratio is between 1 and 1.2. In contrast, in most conventional engine arrangements, the OGVs have a smaller diameter than the fan. This greater outer diameter of the OGVs, in conjunction with the large inner diameter R$_{ogv\ root}$ helps to enable a high bypass ratio with a short OGV, without necessitating a significant restriction at the OGVs, which would accelerate and possibly choke the flow, leading to a reduced pressure ratio across the fan and possible stalling, as well as increased fan noise due to the high velocity fan air.

A third ratio is also defined. The third ratio is defied by the axial distance *Xa*, divided by the outer radius of the outlet guide vanes R$_{ogv}$ and is typically between 1 and 2. By providing a low axial distance relative to the outer radius of the outlet guide vanes, the deflection of the outlet guide vane tips is minimised for a given inlet upload. Consequently, the fan OGVs can again be made less stiff for a given core inlet upload.

In keeping with the above constraints the engine geometry is arranged such that the condition

$$x = k \frac{SPAN_{OGV}^3}{CHORD_{OGV}^4} \cdot \frac{Xa \cdot F_i}{R_{OGV}}$$

is satisfied. It has been found that, for an aerodynamically optimised structural OGV (i.e. ones that act as a forward mount, while providing minimum drag), the constant *x* should be between -20mm and +20mm. This ensures that deflections of the tip of the OGVs 24 are kept to within limits, to prevent the fan cowl 21 from being excessively deflected, which may cause fatigue, and "out of round" conditions, which may in turn result in tip rubs of the fan 13. OGV tip deflection may be in one or more planes. For example, the OGV tip may be deflected radially inwardly or outwardly, though tip deflection is to some extent constrained by the fan cowl 21. The OGV tip may alternatively or in addition be deflected axially (forward or backward), or circumferentially. OGV tip deflection may be determined by measuring the net deflection in all axes. Alternatively, tip deflection may be determined by modelling the engine (for example, in a Finite Element model), and taking measurements from the model.

Consequently, a highly efficient, light weight aircraft engine is provided.

The inventors have modelled a number of engines to determine optimum values of these parameters for various engine sizes and thrust ranges.

Example 1

A first engine is designed to provide between 75000 and 85000 pounds of thrust at maximum static flat rated takeoff thrust. The engine has an overall pressure ratio of approximately 50:1, and a bypass ratio of 15:1. The engine is of a two-spool, geared design, having a low pressure compressor coupled to a fan via a reduction gearbox, a high pressure compressor, and high and low pressure turbines).

In this engine, the ratio of the outlet guide vane span (OGV$_{SPAN}$) to the bypass fan radius (R$_{FAN}$) is approximately 0.54. Consequently, a high bypass ratio is provided, while a relatively short OGV is also provided, thereby resulting in a relatively strong, lightweight engine.

The ratio of the inner radius of the outlet guide vanes and an outer radius of the outlet guide vanes is 0.5 for this engine.

The ratio of the axial distance between the inlet to the bypass duct cowl and the mid chord of the outlet guide vanes at the tip, and an outer radius of the outlet guide vanes is 1.5 for this engine. Where a longer fan inlet is used, this ratio may increase to approximately 1.7.

Example 2

A second engine is designed to provide approximately 50,000 pounds of thrust at maximum static flat rated takeoff thrust. The engine has an overall pressure ratio of approximately 42:1, and a bypass ratio of 11. The engine is of a two-spool, geared design, having a low pressure compressor coupled to a fan via a reduction gearbox, a high pressure compressor, and high and low pressure turbines).

In this engine, the ratio of the outlet guide vane span (OGV$_{SPAN}$) to the bypass fan radius (R$_{FAN}$) is approximately 0.46. Again, a high bypass ratio is provided, while a relatively short OGV is also provided, thereby resulting in a relatively strong, lightweight engine. As can be seen, the disclosed ratio varies somewhat for engines having different thrust and bypass ratios, but remains within the disclosed range.

The ratio of the inner radius of the outlet guide vanes and an outer radius of the outlet guide vanes is 0.53 for this engine.

The ratio of the axial distance between the inlet to the bypass duct cowl and the mid chord of the outlet guide vanes at the tip, and an outer radius of the outlet guide vanes is 1.49 for this engine.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A gas turbine engine (10) comprising:

   a bypass duct cowl (21);
   an engine core housing (22) defining an engine core inlet;
   a bypass fan (13); and
   a plurality of outlet guide vanes (24) extending between a radially inner surface of the bypass duct cowl (21), and a radially outer surface of the engine core housing (22, 23) to define an outlet guide vane span ($SPAN_{OGV}$), the outlet guide vanes (24) being configured to support the engine core housing (22, 23) relative to the bypass duct cowl (21);
   wherein the bypass fan (13) and an engine core inlet (34) define a bypass ratio between 10 and 17; and a ratio of the outlet guide vane span ($OGV_{SPAN}$) to a bypass fan radius ($R_{FAN}$) is between 0.45 and 0.55.

2. A gas turbine engine according to claim 1, wherein at least one of the fan outlet guide vanes (24), bypass duct cowl (21) and bypass fan (13) are arranged such that the condition

$$x = K \frac{SPAN_{OGV}^{3}}{CHORD_{OGV}^{4}} \cdot \frac{Xa \cdot F_i}{R_{OGV}}$$

   is satisfied, where $SPAN_{OGV}$ is the span of the outlet guide vane, $CHORD_{OGV}$ is the chord of the outlet guide vane, $Xa$ is the distance between the bypass nacelle inlet aerodynamic centre of pressure and the centre of the outlet guide vane, $F_i$ is the maximum intake upload for which the engine is certified, $R_{OGV}$ is a distance from the engine axis of the tip of the outlet guide vanes in the radial plane, K is a proportionality constant accounting the youngs modulus of the OGV, and $x$ is the OGV tip deflection, wherein $x$ is between plus 20mm and minus 20mm.

3. A gas turbine engine according to claim 1 or claim 2, wherein a ratio of the inner radius ($R_{OGV\ ROOT}$) of the outlet guide vanes (24) and an outer radius ($R_{OGV}$) of the outlet guide vanes (24) is between 0.4 and 0.6.

4. A gas turbine engine according to claim 3, wherein the ratio of the inner radius ($R_{OGV\ ROOT}$) of the outlet guide vanes (24) and the outer radius ($R_{OGV}$) of the outlet guide vanes (24) is between 0.5 and 0.55.

5. A gas turbine engine according to any of the preceding claims, wherein a ratio of an axial distance between an inlet to the bypass duct cowl and a mid chord of the outlet guide vanes at the tip, and an outer radius of the outlet guide vanes is between 1 and 1.8.

6. A gas turbine according to claim 5, wherein the ratio of an axial distance between an inlet to the bypass duct cowl and a mid chord of the outlet guide vanes at the tip, and an outer radius of the outlet guide vanes is between 1.4 and 1.7.

7. A gas turbine engine according to any of the preceding claims, wherein each outlet guide vane has an aspect ratio of between 2 and 8.

Figure 1

Figure 2

21   30   29   CHORD$_{OGV}$   31   26   32   32   32   32   SPAN$_{OGV}$   28   27

Europäisches
Patentamt

European
Patent Office

Office européen
des brevets

# EUROPEAN SEARCH REPORT

Application Number

EP 19 18 4996

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | Anonymous: "Kuznetsov NK-93 - Wikipedia", , 22 November 2019 (2019-11-22), XP055647330, Retrieved from the Internet: URL:https://en.wikipedia.org/wiki/Kuznetsov_NK-93 [retrieved on 2019-11-28] * figures * | 1,3-7 | INV. F01D25/16 F02K3/06 |
| X | Anonymous: "BAC.TVVD NK-93", , 9 January 2004 (2004-01-09), XP055647349, Retrieved from the Internet: URL:https://web.archive.org/web/20040109111055/http://www.airwar.ru/enc/engines/nk-93.html [retrieved on 2019-11-28] * figures * | 1,3-7 | |
| X | EP 1 340 903 A2 (GEN ELECTRIC [US]) 3 September 2003 (2003-09-03) * figure 1 * | 1,3-5,7 | TECHNICAL FIELDS SEARCHED (IPC) F01D F02K |

The present search report has been drawn up for all claims

| Place of search | Date of completion of the search | Examiner |
|---|---|---|
| The Hague | 28 November 2019 | Angelucci, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 18 4996

28-11-2019

| Patent document cited in search report | | Publication date | Patent family member(s) | | Publication date |
|---|---|---|---|---|---|
| EP 1340903 | A2 | 03-09-2003 | CA | 2419367 A1 | 01-09-2003 |
| | | | CN | 1453466 A | 05-11-2003 |
| | | | EP | 1340903 A2 | 03-09-2003 |
| | | | JP | 2003286857 A | 10-10-2003 |
| | | | RU | 2302545 C2 | 10-07-2007 |
| | | | US | 2003163983 A1 | 04-09-2003 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110192166 A